# EUROPEAN PATENT APPLICATION

(11) **EP 2 020 828 A2**
(43) Date of publication of application: **04.02.2009**
(21) Application number: 07253799.6
(22) Date of filing: 26.09.2007
(51) Int. Cl.: H05B 33/08, H01L 27/148

(54) **Illumination system**

(30) Priority: 30.07.2007 CN 200710137178
(71) Applicant: Topco Technologies Corp., Da-an District, Taipei City 106 (TW)
(72) Inventor: Tsai, Wen-Kuei, Village, Sin-Jhuan-City Taipei County (TW); Wang, Chun-Chien, Sijhih City Taipei County 221 (TW)
(74) Representative: Johnson, Terence Leslie

(57) **Abstract**

An illumination system (100) including an image capture unit (120), a light emitting diode (LED) light source (130), an alarm unit (140), and a control platform (110) is provided. The control platform (110) is electrically connected to the image capture unit (120), the LED light source (130) and the alarm unit (140). The above-mentioned illumination system (100) integrates the LED light source and other units via the control platform (110), so as to provide multiple functions, such as illumination, image capture, alarm and precaution to natural disaster.

## Description

### BACKGROUND OF THE INVENTION

### Field of the Invention

The present invention relates to an illumination system. More particularly, the present invention relates to an illumination system capable of providing multiple functions such as illumination, image capture, alarm and precaution to natural disaster.

### Description of Related Art

LEDs are semiconductor devices. The light emitting chips are mainly made of a compound semiconductor material containing III-V group chemical elements, for example, GaP, GaAs, and the like, and function on the principle of converting electric energy to light. That is to say, the compound semiconductor is powered to release excessive energy through the combination of electrons and holes, so as to emit photon (light). The LED can emit light without being heated or does not discharge to emit light. Therefore, the lifespan of the LED is up to 100,000 hours, and an idling time is not required. In addition, the LED has advantages of quick response speed (approximately 10⁻⁹ seconds), small volume, power-saving, low pollution, high reliability, and ease mass production. Thus, the LEDs have been intensively used in many fields, for example, light source and illumination device in large-scale bulletin boards, traffic lights, cellular phones, scanners, fax machines, etc.

Currently, the light emitting brightness and efficiency of the LEDs are continuously improved, and meanwhile the white LEDs with high brightness are successfully put into mass production, so the white LEDs have been gradually used in illumination devices such as indoor illumination and outdoor street lamp. However, as for the outdoor street lamps, the LED street lamps are generally designed to have a simple illumination function instead of bringing other added values to the passers-by or administrators.

### SUMMARY OF THE INVENTION

The present invention relates to an illumination system applicable for providing multiple functions such as illumination, image capture, alarm and precaution to natural disaster.

The present invention provides an illumination system including an image capture unit, an LED light source, an alarm unit, and a control platform. The control platform is electrically connected to the image capture unit, the LED light source and the alarm unit.

In an embodiment of the present invention, the image capture unit includes a charge coupled device (CCD), a complementary metal oxide semiconductor (CMOS) image sensor, or other sensors capable of sensing various states.

In an embodiment of the present invention, the alarm unit includes a communication device. When the communication device is turned on, the control platform enables the image capture unit or the LED light source.

In an embodiment of the present invention, the alarm unit includes a communication device. When the communication device is turned on, the control platform enables the image capture unit and the LED light source.

In an embodiment of the present invention, the communication device includes a telephone.

In an embodiment of the present invention, the alarm unit includes a loudspeaker, and the control platform is adapted for enabling the loudspeaker to generate an alarm sound.

In an embodiment of the present invention, the alarm unit includes a sensor, and the control platform is adapted for enabling the image capture unit or the LED light source according to a result sensed by the sensor.

In an embodiment of the present invention, the sensor includes an optical sensor, a sound sensor, a vibration sensor, a motion sensor, or a temperature sensor.

In an embodiment of the present invention, the alarm unit includes a sensor, and the control platform is adapted for enabling the image capture unit and the LED light source according to a result sensed by the sensor.

In an embodiment of the present invention, the sensor includes an optical sensor, a sound sensor, a vibration sensor, a motion sensor, or a temperature sensor.

In an embodiment of the present invention, the illumination system further includes a power supply unit electrically connected to the image capture unit, the LED light source, the alarm unit, and the control platform.

In an embodiment of the present invention, the power supply unit includes a DC power supply unit or an AC power supply unit, and the power supply unit also includes a DC power supply unit and an AC power supply unit.

In an embodiment of the present invention, the DC power supply unit includes a solar cell.

In an embodiment of the present invention, the illumination system further includes a wireless communication unit electrically connected to the control platform.

In an embodiment of the present invention, the wireless communication unit includes a global positioning system (GPS) unit, a 3 generation (3G) global system for mobile communications (GSM), a 3.5 generation (3.5G) global system for mobile communications (GSM), a 4 generation (4G) global system for mobile communications (GSM), a worldwide interoperability for microwave access (WiMAX), a personal handy-phone system (PHS), or an analog wireless transmission system.

The present invention integrates the image capture unit, the LED light source, and the alarm unit into the same illumination system via the control platform, thus the illumination system can provide multiple functions such as illumination, image capture, alarm and precaution to natural disaster, so as to bring many added values to the users.

In order to make the aforementioned and other objectives, features and advantages of the present invention comprehensible, preferred embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a schematic view of an illumination system according to a first embodiment of the present invention.

FIG. 2 is a schematic view of an illumination system according to a second embodiment of the present invention.

FIG. 3 is a schematic view of an illumination system according to a third embodiment of the present invention.

FIG. 4 is a schematic view of an illumination system according to a fourth embodiment of the present invention.

FIG. 5 is a schematic view of an illumination system according to a fifth embodiment of the present invention.

FIG 6 is a schematic view of an illumination system according to a sixth embodiment of the present invention.

### DESCRIPTION OF EMBODIMENTS

[The First Embodiment]

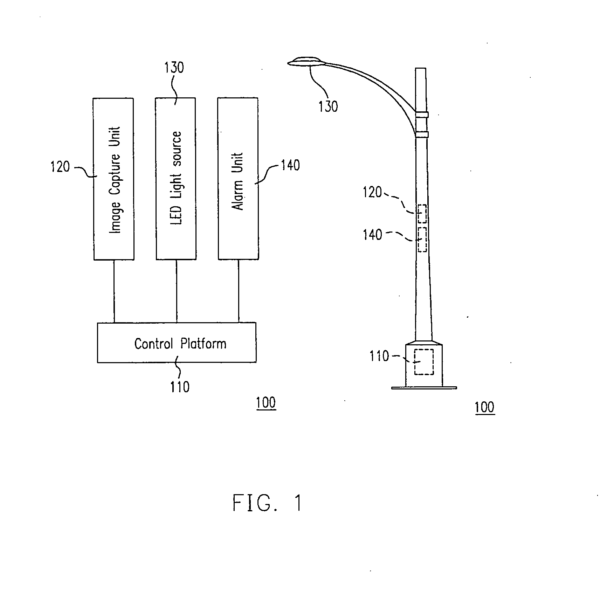

FIG 1 is a schematic view of an illumination system according to a first embodiment of the present invention. Referring to FIG. 1, the illumination system 100 in this embodiment includes an image capture unit 120, an LED light source 130, an alarm unit 140, and a control platform 110. The control platform 110 is electrically connected to the image capture unit 120, the LED light source 130 and the alarm unit 140. The control platform 110 integrates the image capture unit 120, the LED light source 130, and the alarm unit 140 into the illumination system 100, such that the illumination system 100 can provide more abundant and practical functions.

In this embodiment, the image capture unit 120 includes a charge coupled device (CCD), a complementary metal-oxide semiconductor (CMOS) image sensor, or other types of image sensor.

For example, if the illumination system 100 in this embodiment is applied to a street lamp, as shown at the right side of FIG. 1, the appearance will have various alternations. The LED light source 130 in the illumination system 100 is used to provide light on the road, and the brightness and distribution of the light provided by the LED light source 130 can be adjusted appropriately as demanded. The image capture unit 120 is used to capture the static or dynamic images surrounding the street lamp. For example, the image capture unit 120 can be used as a speed camera, and when the environmental brightness is insufficient, the LED light source 130 can be used as a flash light to ensure the image capture unit 120 to capture clear images.

Moreover, the alarm unit 140 is controlled by the control platform 110 to send an alarm information. When the alarm unit 140 sends the alarm information, the image capture unit 120 and the LED light source 130 are simultaneously controlled by the control platform 110 to take appropriate actions. For example, the control platform 110 controls the flash of the LED light source 130 to achieve a more obvious alarm effect, or controls the image capture unit 120 to capture and record the images of the surroundings. In the other aspect, when the alarm unit 140 is enabled, the control platform 110 can maintain the LED light source 130 at a high brightness for a while by over drive, such that the image capture unit 120 may capture clear images. It should be noted that, the alarm unit 140 may be electronic equipment of various types, which will be illustrated hereinafter with reference to the second, the third, and the fourth embodiments.

[The Second Embodiment]

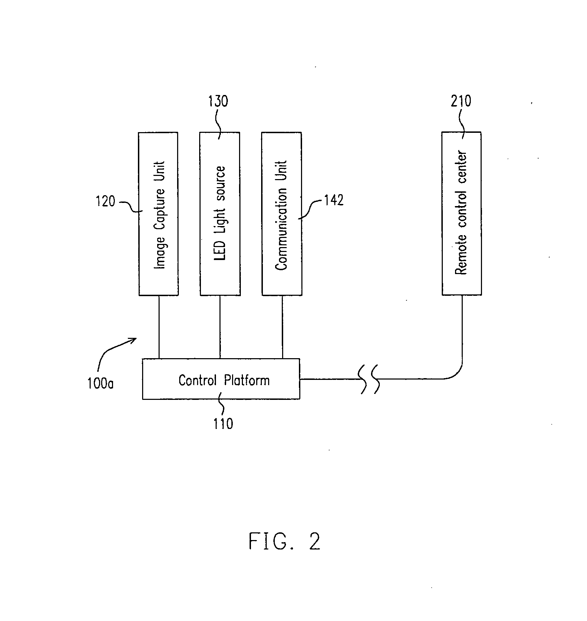

FIG. 2 is a schematic view of an illumination system according to a second embodiment of the present invention. Referring to FIG. 1 and FIG. 2, the illumination system 100a in this embodiment is similar to the illumination system 100 in the first embodiment, except for the difference that, the illumination system 100a adopts a communication device 142 as the alarm unit, when the communication device 142 is turned on, the control platform 110 enables the image capture unit 120 or the LED light source 130, and the control platform 110 may also enable the image capture unit 120 and the LED light source 130 to work simultaneously.

In this embodiment, the communication device 142 is, for example, a telephone which may be connected with a remote control center 210 in a wired or wireless manner. For example, when people are in dire need of aid, people can find a nearby illumination system 100a (e.g., street lamp), and communicate with the remote control center 210 through the telephone in the illumination system 100a. When people pick up the receiver of the telephone, the control platform 110 turns on the image capture unit 120 to capture the images of people according the initial setting, and transmits the images to the remote control center 210. In other words, the illumination system 100a of this embodiment functions as a video phone. Moreover, when people communicate with the remote control center 210, the control platform 110 turns on the LED light source 130 to provide sufficient illumination, such that the remote control center 210 can receive clear images for making a correct suggestion and judgement. Based on the above, the illumination system 100a of this embodiment not only has an illumination function, but also has a function of emergency aids.

It should be noted that, through the remote control of the remote control center 210, the illumination system 100a actively monitors the alternations in the surroundings, such as mud flow, road collapse, tide, ebb, and tsunami. Therefore, the illumination system 100a of this embodiment has a function of emergency aids as well as a function of environment monitoring. Besides, through the remote control of the remote control center 210, the illumination system 100a can actively monitor the occurrences of the cases such as traffic accident on roads, smuggle, or stowaway of frontier areas.

[The Third Embodiment]

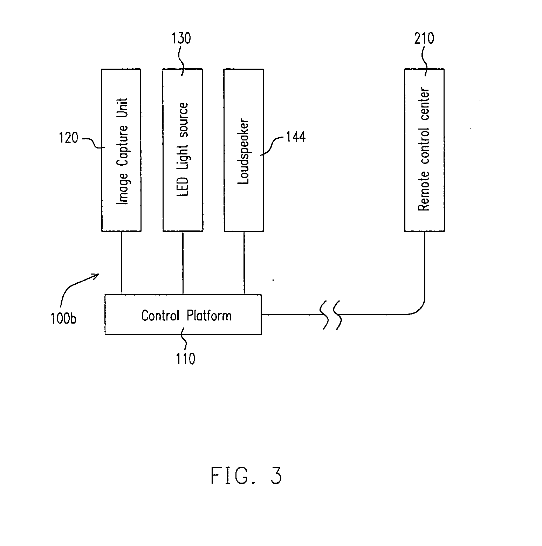

FIG. 3 is a schematic view of an illumination system according to a third embodiment of the present invention. Referring to FIG. 1 and FIG. 3, the illumination system 100b of this embodiment is similar to the illumination system 100 in the first embodiment, except for the difference that, the illumination system 100b adopts a loudspeaker 144 as the alarm unit 140, and the control platform 110 is adapted for enabling the loudspeaker 144 to generate an alarm sound.

The illumination system 100b of this embodiment can not only ensure the safety of people, but also improve the security of society. For example, when the personal safety of people is threatened, people can turn on the loudspeaker 144 of the nearby illumination system 100b (e.g., street lamp) to attract the attention of the nearby residents, so as to warn and prevent the unlawful cases. More particularly, when people turn on the loudspeaker 144, the control platform 110 turns on the image capture unit 120 to capture the images of people according to the initial setting, and transmit the images to the remote control center 210. Moreover, the control platform 110 can also turn on the LED light source 130 to provide sufficient illumination, such that the remote control center 210 can receive clear images for making correct suggestions and judgement.

It should be noted that, the remote control center 210 can remotely control other neighboring illumination systems 100b to generate an alarm sound simultaneously, so as to achieve a better warning effect.

[The Fourth Embodiment]

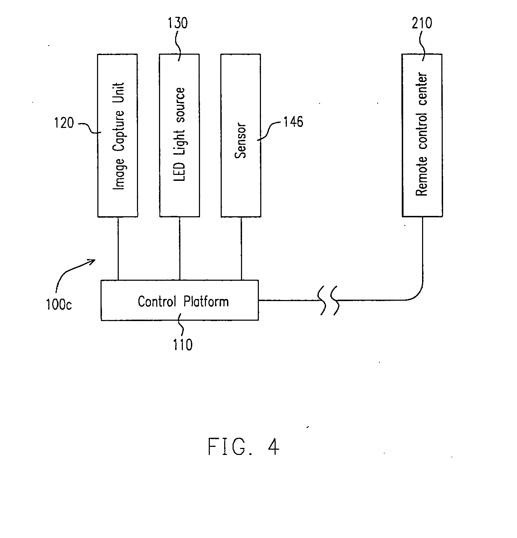

FIG. 4 is a schematic view of an illumination system according to a fourth embodiment of the present invention. Referring to FIG. 1 and FIG. 4, the illumination system 100c of this embodiment is similar to the illumination system 100 in the first embodiment, except for the difference that, the illumination system 100c adopts a sensor 164 as the alarm unit 140, and the sensor 146 includes an optical sensor, a sound sensor, a vibration sensor, a motion sensor, or a temperature sensor. Also, the control platform 110 is adapted for enabling the image capture unit 120 or the LED light source 130 or both of them according to a result sensed by the sensor 146. For example, when the illumination system 100c is applied to a street lamp, when the sensor senses an insufficient light (e.g., in the dark of evening), the control platform 110 turns on the illumination function of the LED light source 130 automatically, and even adjusts the brightness of the LED light source 130 according to the brightness sensed by the optical sensor.

Moreover, when the sensor 146 is a sound sensor, the sensor 146 is capable of judging whether a driver is sounding a horn in a no-horn road section according to a measured decibel value. When the sensor 146 is a vibration sensor, the sensor 146 may sense the severe vibration in the situations such as the street lamp being crashed by an automobile or clashed by the mud flow, in this case, the control platform 110 turns on the image capture unit 120 to find out the surroundings, so as to take necessary alerts on the disaster precaution and disaster rescue or other measures.

When the sensor 146 is a motion sensor, the sensor 146 is used to sense speed of automobiles, the control platform 110 tunrs on the LED light source 130 to emit an intensive flash, and meanwhile turns on the image capture unit 120 to capture images. When the sensor 146 is a temperature sensor, the sensor 146 is used to sense abnormal temperature rising which may be caused by a neighboring fire. Meanwhile, the control platform 110 turns on the image capture unit 120 to find out the surroundings, so as to take measures of fire alert if necessary. In general, the illumination system 100c of this embodiment has multiple functions of intellectual illumination, traffic security, and precaution to disaster.

[The Fifth Embodiment]

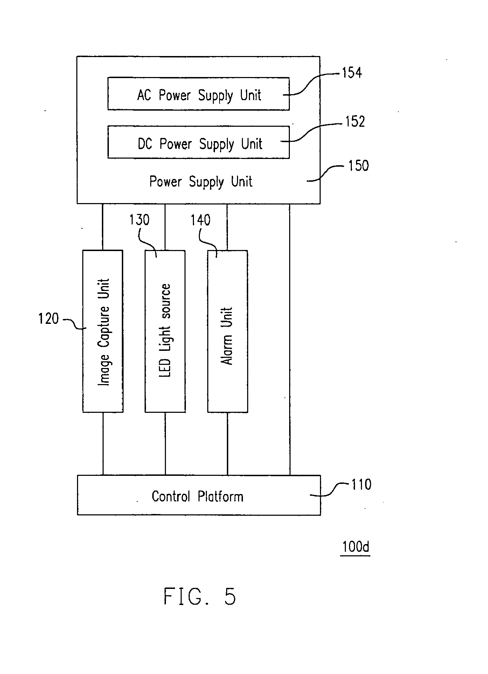

FIG 5 is a schematic view of an illumination system according to a fifth embodiment of the present invention. Referring to FIG. 1 and FIG. 5, the illumination system 100d of this embodiment is similar to the illumination system 100 in the first embodiment, except for the difference that, the illumination system 100d further includes a power supply unit 150 electrically connected to the image capture unit 120, the LED light source 130, the alarm unit 140, and the control platform 110. The power supply unit 150 includes a DC power supply unit 152 or an AC power supply unit 154 or both. The DC power supply unit 152 includes a solar cell. Since the power supply unit 150 supplies power to the image capture unit 120, the LED light source 130, the alarm unit 140, the control platform 110 and other electronic devices in the illumination system, the illumination system 100 has a thorough or partial self-supplying power efficacy, and is adapted for the places where the electrical system is not available, such as remote mountainous areas or off-shore islands.

[The Sixth Embodiment]

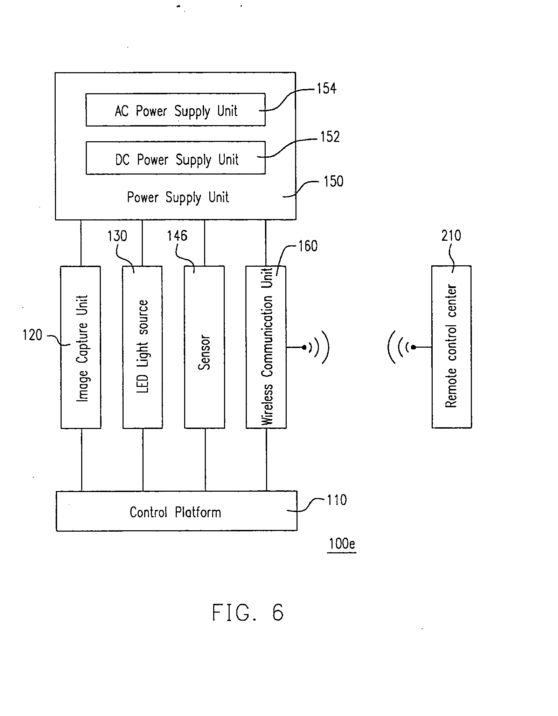

FIG. 6 is a schematic view of an illumination system according to a sixth embodiment of the present invention. Referring to FIG. 5 and FIG. 6, the illumination system 100e of this embodiment is similar to the illumination system 100d in the fifth embodiment, except for the difference that, the illumination system 100e adopts the sensor 146 as the alarm unit, and the illumination system 100e further includes a wireless communication unit 160 electrically connected to the control platform 110. The wireless communication unit 160 includes a global positioning system (GPS) unit carrying a graphic information system (GIS), a 3 generation (3G) global system for mobile communications (GSM), a 3.5 generation (3.5G) global system for mobile communications (GSM), a 4 generation (4G) global system for mobile communications (GSM), a worldwide interoperability for microwave access (WiMAX), a personal handy-phone system (PHS), or an analog wireless transmission system. The wireless communication unit 160 enables the street lamp to communicate with the remote control center 210 in a wireless manner, and the information can be transmitted in a larger amount and with a higher speed.

For example, if the sensor 146 is an optical sensor, and the optical sensor senses a light intensity lower or higher than a preset value, the control platform 110 turns on the 3G-GMS function in the wireless communication unit 160, and transmits the information to the remote control center 210 in a wireless manner. Meanwhile, the remote control center 210 collects all information returned by the illumination systems 110e (street lamp) on the same street so as to determine whether to turn on or turn off all the illumination systems 110e on the street, so as to prevent the illumination systems 110e in the same region (e.g., on the same street) from being partially turned on or turned off.

In another example, when the wireless communication unit 160 is a GPS unit, and the GPS unit senses the abnormal position alternation of the illumination system 100e which may be caused by theft, nature disasters or other reasons. Meanwhile, the control platform 110 is adapted for enabling the wireless communication unit 160 to transmit the alarm information to the remote control center 210 and enabling the image capture unit 120 to capture images for finding out the surroundings, and thus the illumination system 100e of this embodiment also has the function of anti-theft and precaution to disaster.

Since the present invention integrates the image capture unit, the LED light source, and the alarm unit through the control platform, so as to grant the illumination system with the multiple functions such as illumination, image capture, alarm, and precaution to natural disaster. Therefore, the illumination system of the present invention can bring different added values under different circumstances, thereby having a wide application range.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. An illumination system, comprising:
an image capture unit;
a light emitting diode (LED) light source;
an alarm unit; and
a control platform, electrically connected to the image capture unit, the LED light source, and the alarm unit.

2. The illumination system as claimed in claim 1, wherein the image capture unit comprises a charge coupled device (CCD) or a complementary metal-oxide semiconductor (CMOS) image sensor.

3. The illumination system as claimed in claim 1, wherein the alarm unit comprises a communication device, and when the communication device is turned on, the control platform enables the image capture unit or the LED light source.

4. The illumination system as claimed in claim 3, wherein the communication device comprises a telephone.

5. The illumination system as claimed in claim 1, wherein the alarm unit comprises a communication device, and when the communication device is turned on, the control platform enables the image capture unit and the LED light source.

6. The illumination system as claimed in claim 5, wherein the communication device comprises a telephone.

7. The illumination system as claimed in claim 1, wherein the alarm unit comprises a loudspeaker, and the control platform is adapted for enabling the loudspeaker to generate an alarm sound.

8. The illumination system as claimed in claim 1, wherein the alarm unit comprises a sensor, and the control platform is adapted for enabling the image capture unit or the LED light source according to a result sensed by the sensor.

9. The illumination system as claimed in claim 8, the sensor comprises an optical sensor, a sound sensor, a vibration sensor, a motion sensor, or a temperature sensor.

10. The illumination system as claimed in claim 1, wherein the alarm unit comprises a sensor, and the control platform is adapted for enabling the image capture unit and the LED light source according to a result sensed by the sensor.

11. The illumination system as claimed in claim 10, the sensor comprises an optical sensor, a sound sensor, a vibration sensor, a motion sensor, or a temperature sensor.

12. The illumination system as claimed in claim 1, further comprising a power supply unit electrically connected to the image capture unit, the LED light source, the alarm unit, and the control platform.

13. The illumination system as claimed in claim 12, wherein the power supply unit comprises a DC power supply unit or an AC power supply unit.

14. The illumination system as claimed in claim 13, wherein the DC power supply unit comprises a solar cell.

15. The illumination system as claimed in claim 12, wherein the power supply unit comprises a DC power supply unit and an AC power supply unit.

16. The illumination system as claimed in claim 15, wherein the DC power supply unit comprises a solar cell.

17. The illumination system as claimed in claim 1, further comprising a wireless communication unit electrically connected to the control platform.

18. The illumination system as claimed in claim 17, wherein the wireless communication unit comprises a global positioning system (GPS) unit, a 3 generation (3G) global system for mobile communications (GSM), a 3.5 generation (3.5G) global system for mobile communications (GSM), a 4 generation (4G) global system for mobile communications (GSM), a worldwide interoperability for microwave access (WiMAX), a personal handy-phone system (PHS), or an analog wireless transmission system.
